# EUROPEAN PATENT APPLICATION

(11) **EP 0 730 379 A2**
(43) Date of publication of application: **04.09.1996**
(21) Application number: 96102733.1
(22) Date of filing: 23.02.1996
(51) Int. Cl.: H04N 7/087

(54) **Transceiver system of audio signals together with teletext signals**

(30) Priority: 02.03.1995 IT TO950150
(71) Applicant: SELECO S.p.A., I-33170 Pordenone (IT)
(72) Inventor: Zecchin, Massimo, 33085 Maniago (PN) (IT)
(74) Representative: Dini, Roberto, Dr. Ing.

(57) **Abstract**

A transceiver system of additional audio signals in a system of television signals is described; the main characteristic of the described system consists in that the additional audio signals are sampled, digitised and inserted in the video signal during the vertical flyback.

## Description

The present invention relates to a transceiver system of additional audio signals in a system of television signals.

It is known that the audio information in a television signal is transmitted by modulating in frequency an appropriate carrier, the so called audio carrier.

It would be useful in various cases to arrange for a supplementary audio information, for example for transmitting the same information in two different languages; in fact a system is known for transmitting two audio informations; this system is for instance used in the so-called stereo audio transmissions; it also provides for transmitting a second audio, renouncing the stereo performance.

However there are other cases in which a further audio information could be useful; for instance for giving information concerning the contents of an image to blind people.

The aim of the present invention is that of indicating a transmission system of additional audio signals in a system of television signals.

So as to reach such aims the present invention has as its subject a transceiver system of additional audio signals in a system of television signals, characterised in that the additional audio signals are sampled, digitised and inserted in the video signal during the vertical flyback.

Further characteristics and advantages of the present invention shall result in being clear from the following description and annexed drawings, supplied purely as an explanatory and non-limiting example, wherein:
- figure 1 represents the general diagram of the transmission system of additional audio signals according to the invention;
- figure 2 represents the general diagram of the receiving system of additional audio signals, according to the invention.

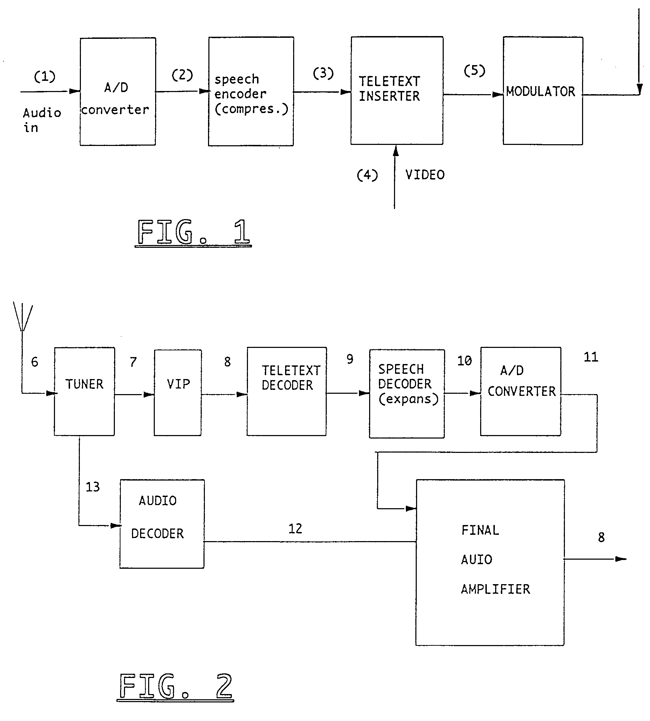

In figure 1 the general diagram of the transmission system of additional audio signals according to the invention is represented as blocks.

The system provides an audio signal input (from a microphone, recorder or other source) indicated with number (1); said signal is sampled and digitised in a circuit (A/D converter), for instance of 18 bit per sample with an anaolg to digital converter circuit of the known type BB101, by the company Burr Brown; the digital sequence thus obtained (2) is compressed in a circuit (speech encoder) with an appropriate algorithm for reducing the redundancy (in this way it can arrive at 7,6 Kbit/s, in the case of a 4 KHz band); the sequence thus compressed (3) is sent to a teletext inserter which provides for inserting the audio signal in the video signal (4); the signal thus obtained (5) is sent to the modulator (modulator) and then transmitted to the antenna.

The insertion can preferentially take place on a determined television line during the vertical flyback (for instance line 31); a single line, subtracted from the teletext or another signal, can be sufficient for transmitting a continuous audio signal.

In fact at 8 Kbit/s. i.e. 1 Kbyte/s., being as that in one second 50 lines would be transmitted, only 20 Byte per line would be necessary, that can easily be housed in a teletext line.

In figure 2 the general diagram of the receiving system of additional audio signals, according to the invention is represented.

The television signal is received over the air (6) is tuned and converted to intermediate frequency in a block indicated with the word TUNER; the signal is divided in the conventional audio signal (13) and in the video signal (7) which is demodulated in the block indicated with VIP (for instance by way of the Philips circuit SAA5231); the result (8) passes to a teletext decoder (for instance constituted by the integrated circuit SAA5250 by Philips) which extracts the useful bytes (9) and sends them to a speech decoder which re-expands the signal band (for instance to 3,6 KHz); the digital signal obtained in this way (10) passes to a digital to analog converter (for instance constituted by the known circuit of the type BB201, by the company Burr Brown) which regenerates the original signal (11); the latter is then sent to an amplifier, which is also reached by the original television audio (12), so as that the user has the availability of both the audio of the television transmission and that of the comments of the video contents; such comments shall be appropriately inserted, by the director, at the site of broadcasting, in the pauses of the normal audio signal.

This naturally applying in the case of transmissions dedicated for the blind.

From the given description the characteristics of the transceiver system subject of the present invention result in being clear, as do its advantages.

In particular the transceiver system according to the invention allows in a simple way and using an existing channel, constituted by the teletext signal, to add a supplementary audio, being relative to a comment on the video content, which allows blind people to follow, for example a film transmitted on the television.

It is clear that numerous variants can be made to the transceiver system subject of the present invention, without for this departing from the novelty principles inherent in the inventive idea, as it is also clear that in realising the invention the materials and forms of the details illustrated can be different, and they may be substituted with technically equivalent elements.

One variant could consist in transmitting the additional audio signals simultaneously with the conventional audio signals and provide a switch which during reception allows for choosing or the conventional audio or the additional audio; in the case of additional audio signals transmitted simultaneously with the conventional audio, the additional audio could be a third signal that provides an ambient or surround effect to an audio signal, in particular when the latter has a musical content.

Moreover, the described system can be used in interactive television applications; in fact the teletext channel can be used as a vehicle towards the user of information being relative to his requests (sent for instance by telephone); or as a vehicle towards the user of information concerning the state of interactivity with the television broadcaster; such information being audio information, but there is nothing to say that video information could also be associated.

For instance the user could be asked to express an opinion (by telephone) on publicity inserts; or to send codes of products bought in this way participating in the extraction of prizes; the names of the winners could then be inserted in determined teletext pages; in the case of a game shows based on points, the user could give the replies by way of telephone and see in real time in a window of the television (via teletext) the data relative to the classification of the participants; and so on.

## Claims

1. Transceiver system of additional audio signals in a system of television signals, characterised in that the additional audio signals are sampled, digitised and inserted in the video signal during the vertical flyback.

2. Transceiver system, according to claim 1, characterised in that said additional audio signals are inserted in the form of packages on a determined line of those usually dedicated to teletext signals, in particular line 31.

3. Transceiver system, according to claim 1 or 2, characterised in that said additional audio signals contain a comment on the video contents, in particular of a film.

4. Transceiver system, according to claim 3, characterised in that such comment is inserted in the pauses of the normal audio signal.

5. Transceiver system, according to claim 1 or 2, characterised in that said additional audio signals contain information to use in interactive television applications, in which the user in turn sends information to the broadcaster, for instance by telephone.

6. Transceiver system, according to claim 5, characterised in that such information is audio information, to which video information is also associated.

7. Transceiver system, according to one or more of the previous claims, characterised in that in transmission the digital sequence is compressed (3), sent to a circuit that inserts data in the teletext signal (inserter teletext) which provides for inserting the additional audio signal in the video signal (4), in the space dedicated to the teletext service; the signal thus obtained (5) is sent to the modulator and then transmitted to the antenna.

8. Transceiver system, according to claim 7, characterised in that the audio signal is inserted in the teletext line number 31 during the vertical flyback.

9. Transceiver system, according to claim 7, characterised in that the signal is compressed to 7,6 Kbit/s.

10. Transceiver system, according to one or more of the previous claims, characterised in that in reception the signal passes to a teletext decoder which extracts the useful digital data (9) and sends such data to decoder-expander circuit (speech decoder) which re-expands the band of the signal, that the digital signal thus obtained (10) passes to a digital to analog converter which regenerates the additional signal (11); this is sent to an amplifier, to which the original television audio also arrives (12), in such a way that the user has the availability of both the audio of the television transmission and the additional audio (11).

11. Transceiver system, according to claim 4, characterised in that said additional audio signals contain a comment on the video content for the blind.

12. Transceiver system, according to claim 10, characterised in that in the receiver a switch is provided for enabling the selection of either the original television audio (12), or the additional (11).

13. Transceiver system, according to claim 1, characterised in that said additional audio signals contain a third audio signal apt at creating a multi-phonic signal (3 channel).

14. Transceiver system of additional signals in a system of television signals, characterised in that said additional signals are digitised and inserted in the video signal during the vertical flyback in a line of the teletext signal.

15. Transceiver system of additional signals, according to the previous claim, characterised in that such additional signals have the purpose of supplying replies to the user in an interactive television system.
